# FASCICULE DE BREVET EUROPEEN

(11) **EP 0 364 324 B1**
(45) Date de publication et mention de la délivrance du brevet: **12.07.1995**
(21) Numéro de dépôt: 89402668.1
(22) Date de dépôt: 28.09.1989
(51) Int. Cl.: C08K 3/00, C04B 26/02

(54) **Procédé pour assurer le maintien en place au cours du temps d'un revêtement de dalles plombantes amovibles**
Verfahren zur Lagesicherung einer Bekleidung mit austauschbaren Kacheln
Method for securing a coating of removable tiles

(30) Priorité: 30.09.1988 FR 8812858
(43) Date de publication de la demande: 18.04.1990
(73) Titulaire: BOSTIK S.A., F-77170 Brie Comte Robert (FR)
(72) Inventeur: Duriez, André, Livry S/Seine F-77000 Melun (FR)
(74) Mandataire: Chaillot, Geneviève

(56) Documents cités:
- DE-A- 427 909
- FR-A- 1 200 422
- Römpps Chemie-Lexikon, 8ème Edition, Franckh'sche Verlagshandlung, Stuttgart, 1987
- Cahiers du centre scientifique et technique du bâtiment, livraison 283, octobre 1987, cahier 2193

## Description

La présente invention concerne le domaine des revêtements de sols de construction et, plus particulièrement, celui des revêtements de dalles plombantes amovibles.

Les dalles plombantes amovibles sont des éléments de moquette ou de revêtements textiles aiguilletés ou bouclés, qui sont destinés à être placés, selon un quadrillage approprié, sur un sol convenable, tel que chape de ciment, parquet, revêtement plastique, etc. Cependant, ces dalles ne sont que posées sur le sol, en étant adjacentes entre elles. Leur intérêt est que, n'adhérant donc pas au sol, on peut les remplacer rapidement, par exemple si elles sont usées ou tachées, en substituant une dalle neuve à une dalle usagée. A cet effet, il suffit, à l'aide d'un outil approprié, de soulever la dalle usagée pour l'extraire de l'ensemble du revêtement et d'y insérer à la place la dalle neuve.

Ce type de revêtement par dalles plombantes amovibles présente cependant un inconvénient qui, à l'heure actuelle, limite beaucoup son emploi. A savoir, les dalles situées dans les zones à passages fréquents se trouvent sollicitées par des efforts mécaniques multiples, et elles ont tendance à glisser sur le sol en repoussant les dalles voisines ; l'accumulation des déplacements provoque alors des chevauchements des dalles, qui sont inesthétiques, dangereux pour la circulation car on peut facilement trébucher, et qui compromettent la durabilité du revêtement.

Pour remédier à cet inconvénient, on a proposé jusqu'à maintenant de fixer ces dalles provisoirement à l'aide d'une colle auto-adhésive. Toutefois, la plupart des matières auto-adhésives qui ont été utilisées dans ce but vieillissent mal, les dalles perdant alors le caractère amovible qui avait au départ justifié leur choix au lieu d'un revêtement classique de moquette ou autre matériau textile aiguilleté.

La Société Déposante propose, pour résoudre le problème posé d'assurer le maintien en place au cours du temps de dalles plombantes amovibles sur un sol de construction, tout en conservant leur caractère amovible, le procédé consistant à disposer sur le sol, avant la pose desdites dalles plombantes, un revêtement d'égalisation adhérant au sol et présentant un état de surface homogène, rugueux, de rugosité choisie pour lui permettre de s'opposer au glissement latéral desdites dalles plombantes sollicitées par les contraintes normales du passage.

La présente invention a donc d'abord pour objet un procédé pour assurer le maintien en place au cours du temps de dalles plombantes amovibles sur un sol de construction, tout en conservant leur caractère amovible, caractérisé par le fait qu'avant la pose desdites dalles plombantes, on applique sur le sol de construction, une couche, généralement de l'ordre du millimètre ou inférieure au millimètre, d'une composition fluide, durcissable, comprenant :
- au moins un liant polymère filmogène monocomposant si la composition est durcissable par réactivité avec l'air ambiant, par exemple lors de l'exposition à l'humidité atmosphérique ou à l'oxygène, ou par suite de l'évaporation d'un inhibiteur de prise, ou un liant polymère filmogène à deux composants si la composition est durcissable par un durcisseur organique ; et
- au moins une charge particulaire, cristalline, non friable, de granulométrie comprise entre 5 »m et 800 »m, de forme granulaire à arêtes vives ou coupantes, de proportion par rapport au(x) liant(s) choisie pour qu'elle procure, en surface du revêtement durci résultant, les aspérités aptes à retenir les dalles plombantes,
et on laisse durcir la couche ainsi appliquée pour obtenir ledit revêtement durci en un film continu, destiné à recevoir les dalles plombantes.

La présente invention porte également sur l'utilisation, pour la mise en oeuvre du procédé tel que défini ci-dessus, de la composition durcissable précitée, destinée à être appliquée sur un sol de construction, afin de former, après durcissement, un revêtement uniforme. Cette composition comprend donc au moins un liant polymère filmogène, et au moins une charge particulaire, cristalline et non friable, dont la forme, la granulométrie et la teneur par rapport au(x) liant(s), sont choisies pour que la revêtement formé présente un état de surface homogène ayant la rugosité recherchée, les particules de la (ou des) charge(s) faisant saillie à la surface dudit revêtement.

On peut avantageusement choisir un liant polymère qui soit tel que l'enduit ou revêtement résultant puisse adhérer aux sols existants de toutes natures. En effet, on peut envisager de poser des dalles plombantes sur des sols de natures aussi variées que ciment, céramique, marbre, bois et agglomérés, sols plastiques tels que "Balatum", "Linoleum", "Gerflex", moquettes et revêtements aiguilletés. Il va également de soi que l'on peut prévoir un liant qui soit mieux adapté à tel ou tel type de sol, ce choix étant à la portée de l'homme du métier.

Le liant polymère peut également être choisi avantageusement de sorte que la composition résultante soit durcissable par réactivité avec l'air ambiant, par exemple lors de l'exposition de la composition à l'humidité atmosphérique ou à l'oxygène, ou par suite de l'évaporation d'un inhibiteur de prise. On se trouve, dans ce cas, en présence d'un liant polymère monocomposant.

Des exemples de ces liants polymères sont constitués par les copolymères styrène-acide acrylique, les copolymères à base d'esters acryliques, les copolymères éthylène-acétate de vinyle (EVA), les terpolymères éthylène-acétate de vinyle-acrylate d'alkyle (le groupe alkyle possédant de 1 à 8 atomes de carbone), et les polyuréthannes monocomposants.

Egalement, le liant polymère peut être associé à un durcisseur organique, constitué notamment par un isocyanate ou une amine. On se trouve, dans ce cas, un présence d'un liant polymère à deux composants. A titre d'exemple, on peut mentionner la combinaison polyol/poly-isocyanate (polyuréthanne bicomposant).

On peut enfin prévoir que le liant polymère (mono-ou bicomposant) soit associé à une quantité mineure de liant hydraulique (comme le ciment Portland, un ciment alumineux ou un plâtre), dans des proportions exactement nécessaires à l'obtention de la "vitesse de prise" et de la réaction de cristallisation par absorption de l'eau de constitution du polymère en dispersion.

Les charges sont principalement d'origine siliceuse ; on peut citer toutes les espèces ou variétés minérales de la famille de la silice, de préférence le quartz, ainsi que le sable siliceux. Leur granulométrie est généralement comprise entre environ 5 microns et 800 microns. Leur forme et leur proportion par rapport au(x) liant(s) sont choisies de telle sorte qu'elles puissent procurer, en surface du revêtement durci résultant, des aspérités aptes à retenir les dalles plombantes. Ainsi, les formes granulaires à arêtes vives ou coupantes sont préférées. En ce qui concerne le rapport pondéral entre les liants polymères (matières sèches) et ces charges procurant l'effet anti-glissement recherché, il est avantageusement compris entre environ 50 et 800. Il est à la portée de l'homme du métier de choisir les caractéristiques de ces charges pour obtenir un état de surface du revêtement adapté au relief des surfaces inférieures des dalles plombantes destinées à être posées sur ledit revêtement.

Les compositions selon l'invention peuvent également renfermer, en dehors des véhicules généralement constitués par de l'eau, des adjuvants usuels, comme :
- des solvants de coalescence, tels que, par exemple, le white spirit, l'éthylène-glycol ou un éther de glycol, comme l'éther de propylène glycol,
- des agents épaississants régulateurs de la viscosité de la composition finale (par exemple, dérivés cellulosiques ou acryliques),
- des matières de remplissage (charges secondaires) qui ne participent pas à la formation des aspérités de surface, mais qui jouent simplement le rôle de liants mécaniques entre les charges et qui contribuent à une bonne rhéologie d'étalement, comme la poudre d'ardoise, les silicates naturels de structure lamellaire associés à des oxydes métalliques minéraux, lesquels jouent alors le rôle de pigments,
- des pigments, notamment pour visualiser la couche de revêtement au moment de son étalement sur le sol,
- des agents favorisant la formation du film, des agents anti-mousse, des agents fongicides, des agents insecticides, des agents tensio-actifs, des agents d'hydrofugation, des agents anti-gel, etc.

De préférence, les différents constituants de la composition selon l'invention sont choisis parmi les matières ininflammables et non toxiques, ainsi que, si on le souhaite, pour permettre un décapage ultérieur du revêtement.

On peut également choisir les constituants de la composition selon l'invention de telle sorte qu'il soit possible d'utiliser par la suite ce film comme primaire d'adhérence pour des produits à base de ciment ou des colles, pour le cas où l'on déciderait de retirer les dalles plombantes. Un tel choix est également à la portée de l'homme du métier.

Les compositions selon la présente invention sont des compositions fluides, applicables avec les outils habituels : rouleau de peintre, spatule, lisseuse ; on peut même choisir avantageusement leurs constituants pour qu'elles puissent être projetées par pistolage. En règle générale, une application en une seule couche, inférieure au millimètre, suffit pour obtenir le but recherché.

On obtient ainsi, lors de l'application, un film souple et élastique, qui épouse les dilatations et les retraits éventuels du sol existant. Le film continu ainsi formé s'oppose au passage ascendant des poussières et salissures qui proviendraient d'une dégradation du support de base, par exemple de microfissures qui se seraient formées dans une chape de ciment.

Les exemples suivants sont destinés à illustrer des compositions selon la présente invention. Dans ces exemples, les parties et pourcentages sont donnés en poids, sauf indication contraire. Les formulations sont données en quantités pour 1000.

### Exemple 1

On prépare une composition durcissable à l'air ambiant, destinée à être appliquée sur un support minéral (ciment, carrelage, céramique), ou sur un support métallique (acier traité, aluminium) ou encore sur un support en bois ou dérivé du bois (plancher), ladite composition étant formulée comme suit :

| | |
|---|---|
| . Eau | 254 |
| . Dispersion de copolymère styrène-acide acrylique (extrait sec : 50% : environ), commercialisée sous la dénomination "ACRONAL 290 D" par la Société "BASF" | 130 |
| . Fongicide en quantité suffisante pour satisfaire aux exigences de la norme NF x 41514 A et B | 1 |
| . White-spirit ou éthylène-glycol (agent de coalescence) | 10 |
| . Sable siliceux de répartition granulométrique comprise entre 80 et 200 »m, commercialisé par la Société "FULCHIRON" | 100 |
| . Silice broyée de répartition granulométrique comprise entre 5 et 50 »m | 200 |
| . Poudre d'ardoise de répartition granulométrique comprise entre 50 et 80 »m | 300 |
| . Epaississant cellulosique commercialisé sous la dénomination "TYLOSE MH 200" par la Société "HOECHST" | 5 |

On mélange les différents constituants sous agitation, et on obtient une composition homogène de revêtement prête à l'emploi, qui présente une bonne stabilité au stockage.

On a appliqué au rouleau ladite composition sur des supports de nature précitée, en une couche, sur une épaisseur de l'ordre du millimètre.

Sur le revêtement résultant, on a placé des dalles plombantes et l'on a soumis ce revêtement final à l'essai Baumberg, lequel consiste à faire passer une chaise à roulettes sur ledit revêtement pour voir si cela l'abîmerait. Plus de 2500 passages ont été effectués sans que l'on observe de détérioration.

### Exemple 2

On prépare une composition durcissable à l'air ambiant, destinée à être appliquée sur des supports de nature organique, tels que asphalte, bitume, peintures de sols, linoléum ou tous revêtements de sols plastiques, ladite composition étant formulée comme suit :

| | |
|---|---|
| . Eau | 50 |
| . Dispersion de copolymères à base d'esters acryliques (extrait sec : 50% environ), commercialisée sous la dénomination "MOWITON" par la Société "HOECHST" | 220 |
| . Ether de propylène glycol commercialisé sous la dénomination "PLASTILIT 3060" par la Société "BASF" (agent de coalescence) | 10 |
| . Sel de sodium de l'acide acrylique en solution aqueuse à 10%, commercialisé sous la dénomination "P.V.N." par la Société "BASF" (épaississant) | 20 |
| . Sable siliceux de répartition granulométrique comprise entre 80 et 300 »m, commercialisé par la Société "FULCHIRON" | 500 |
| . Poudre d'ardoise de répartition granulométrique comprise entre 50 et 80 »m | 200 |

On mélange les différents constituants sous agitation, et on obtient une composition homogène de revêtement prête à l'emploi, qui présente une bonne stabilité au stockage. On a appliqué cette solution sur un support de nature précitée, dans les conditions indiquées à l'Exemple 1. On a posé le revêtement de dalles plombantes qui, soumis à l'essai Baumberg, a également donné des résultats tout à fait satisfaisants.

## Revendications

1. Procédé pour assurer le maintien en place au cours du temps de dalles plombantes amovibles sur un sol de construction, tout en conservant leur caractère amovible, caractérisé par le fait qu'avant la pose desdites dalles plombantes, on applique sur le sol de construction, une couche, généralement de l'ordre du millimètre ou inférieure au millimètre, d'une composition fluide, durcissable, comprenant :
- au moins un liant polymère filmogène monocomposant si la composition est durcissable par réactivité avec l'air ambiant, par exemple lors de l'exposition à l'humidité atmosphérique ou à l'oxygène, ou par suite de l'évaporation d'un inhibiteur de prise, ou un liant polymère filmogène à deux composants si la composition est durcissable par un durcisseur organique ; et
- au moins une charge particulaire, cristalline, non friable, de granulométrie comprise entre 5 »m et 800 »m, de forme granulaire à arêtes vives ou coupantes, de proportion par rapport au(x) liant(s) choisie pour qu'elle procure, en surface du revêtement durci résultant, les aspérités aptes à retenir les dalles plombantes,
et on laisse durcir la couche ainsi appliquée pour obtenir ledit revêtement durci en un film continu, destiné à recevoir les dalles plombantes, et on pose lesdites dalles plombantes.

2. Procédé selon la revendication 1, caractérisé par le fait qu'on applique la composition durcissable au rouleau, à la spatule ou à la lisseuse, ou encore par projection par pistolage.

3. Utilisation, pour la mise en oeuvre du procédé tel que défini à l'une des revendications 1 et 2, d'une composition durcissable comprenant :
- au moins un liant polymère filmogène monocomposant si la composition est durcissable par réactivité avec l'air ambiant, par exemple lors de l'exposition à l'humidité atmosphérique ou à l'oxygène, ou par suite de l'évaporation d'un inhibiteur de prise, ou un composant d'un liant polymère filmogène destiné à être associé à un durcisseur organique constituant le second composant dudit liant polymère ; et
- au moins une charge particulaire, cristalline, non friable, de granulométrie comprise entre 5 »m et 800 »m, de forme granulaire à arêtes vives ou coupantes, de proportion par rapport au(x) liant(s) choisie pour qu'elle procure, en surface du revêtement durci résultant, les aspérités aptes à retenir les dalles plombantes.

4. Utilisation selon la revendication 3, caractérisée par le fait que la composition comprend au moins un liant polymère filmogène monocomposant choisi parmi les copolymères styrène-acide acrylique, les copolymères à base d'esters acryliques, les copolymères éthylène-acétate de vinyle, les terpolymères éthylène-acétate de vinyle-acrylate d'alkyle, le groupe alkyle étant en C₁-C₈, et les polyuréthannes monocomposants.

5. Utilisation selon la revendication 3, caractérisée par le fait que le liant polymère filmogène est à deux composants, le second composant durcisseur étant constitué par un isocyanate ou une amine.

6. Utilisation selon la revendication 5, caractérisée par le fait que le liant polymère filmogène à deux composants est la combinaison polyol/polyisocyanate fournissant un polyuréthanne.

7. Utilisation selon l'une des revendications 3 à 6, caractérisée par le fait que le liant polymère est associé à un liant minéral hydraulique.

8. Utilisation selon l'une des revendications 3 à 7, caracterisée par le fait que la charge particulaire cristalline est une charge siliceuse comme le quartz et le sable siliceux.

9. Utilisation selon l'une des revendications 3 à 8, caractérisée par le fait que la composition renferme en dehors du véhicule généralement aqueux, des adjuvants choisis parmi les adjuvants de coalescence, les agents épaississants, régulateurs de viscosité et de rhéologie, les matières de remplissage, les agents filmogènes, les agents anti-mousse, les agents antifongiques, les agents insecticides, les agents tensio-actifs, les agents d'hydrofugation, les agents anti-gel et les pigments.

## Claims

1. Process for ensuring the maintaining of removable sealing slabs in place in the course of time on a construction ground, while preserving their removable nature, characterized in that, before the said sealing slabs are placed, a layer, generally of the order of a millimetre or thinner than a millimetre, of a curable fluid composition including the following is applied to the construction ground:
- at least one film-forming polymer binder which is single-component if the composition is curable by reactivity with the surrounding air, for example when exposed to atmospheric moisture or to oxygen, or as a result of the evaporation of a setting inhibitor, or a two-component film-forming polymer binder if the composition is curable by an organic hardener; and
- at least one nonbrittle crystalline particulate filler with a particle size of between 5 »m and 800 »m, of granular shape with sharp or cutting ridges, in a proportion in relation to the binder(s) which is chosen so that at the surface of the resulting cured coating it provides asperities capable of retaining the sealing slabs,
and the layer thus applied is allowed to cure to obtain the said coating cured as a continuous film intended to receive the sealing slabs, and the said sealing slabs are placed.

2. Process according to Claim 1, characterized in that the curable composition is applied with a roller, a spatula or a smoothing plank, or else by spraying with a gun.

3. Use, for applying the process as defined in one of Claims 1 and 2, of a curable composition including:
- at least one film-forming polymer binder which is single-component if the composition is curable by reactivity with the surrounding air, for example when exposed to atmospheric moisture or oxygen, or as a result of the evaporation of a setting inhibitor, or a component of a film-forming polymer binder intended to be used in combination with an organic hardener forming the second component of the said polymer binder; and
- at least one nonbrittle crystalline particulate filler with a particle size of between 5 »m and 800 »m, of granular shape with sharp or cutting ridges, in proportion relative to the binder(s) which is chosen so that at the surface of the resulting cured coating it provides the asperities capable of retaining the sealing slabs.

4. Use according to Claim 3, characterized in that the composition includes at least one single-component film-forming polymer binder chosen from styrene-acrylic acid copolymers, copolymers based on acrylic esters, ethylene-vinyl acetate copolymers and ethylene-vinyl acetate-alkyl acrylate terpolymers, the alkyl group being C₁-C₈, and single-component polyurethanes.

5. Use according to Claim 3, characterized in that the film-forming polymer binder is two-component, the hardener second component consisting of an isocyanate or an amine.

6. Use according to Claim 5, characterized in that the two-component film-forming polymer binder is the polyol/polyisocyanate combination yielding a polyurethane.

7. Use according to one of Claims 3 to 6, characterized in that the polymer binder is used in combination with a hydraulic inorganic binder.

8. Use according to one of Claims 3 to 7, characterized in that the crystalline particulate filler is a siliceous filler such as quartz and siliceous sand.

9. Use according to one of Claims 3 to 8, characterized in that, apart from the generally aqueous carrier, the composition includes adjuvants chosen from coalescence adjuvants, thickening agents, viscosity and rheology regulators, filling substances, film-forming agents, antifoaming agents, antifungal agents, insecticides, surface-active agents, agents imparting water repellency, antifreeze agents and pigments.

## Patentansprüche

1. Verfahren zur Sicherung der Lagestabilität auf Zeit von abnehmbaren Beschwerungsplatten auf einem Baugrund unter Beibehaltung ihrer Abnehmbarkeit, dadurch gekennzeichnet, daß man vor dem Verlegen der Beschwerungsplatten auf den Baugrund im allgemeinen in einer Stärke von einem Millimeter oder unter einem Millimeter eine Schicht aus einer flüssigen, härtbaren Zusammensetzung, bestehend aus:
- mindestens einem filmbildenden polymeren Einkomponenten-Bindemittel, falls die Zusammensetzung durch Reaktion mit der Umgebungsluft, beispielsweise wenn sie der Luftfeuchtigkeit oder dem Sauerstoff ausgesetzt wird oder infolge der Verdunstung eines Abbindehemmstoffes, härtbar ist, oder einem filmbildenden polymeren Zweikomponenten-Bindemittel, falls die Zusammensetzung durch einen organischen Härter härtbar ist, und
- mindestens einem teilchenförmigen kristallinen abriebfesten Füllstoff mit einer Teilchengröße zwischen 5 »m und 800 »m, einer Kornform mit scharfen oder schneidenden Kanten, in einem Anteil, bezogen auf das bzw. die Bindemittel, der so gewählt wird, daß an der Oberfläche des entstehenden ausgehärteten Belages eine zum Festhalten der Beschwerungsplatten geeignete Rauheit erzeugt wird, aufträgt
und die auf diese Weise aufgetragene Schicht zu einem ausgehärteten Belag aus einem durchgehenden Film aushärten läßt, der zur Aufnahme der Beschwerungsplatten bestimmt ist, und die Verlegung der Beschwerungsplatten vornimmt.

2. Verfahren nach Anspruch 1, dadurch gekennzeichnet, daß die härtbare Zusammensetzung mit einer Walze, Spachtel oder durch Aufstreichen, oder auch durch Aufspritzen mit einer Spritzpistole, aufgetragen wird.

3. Verwendung, zur Durchführung des Verfahrens wie in einem der Ansprüche 1 und 2 beschrieben, einer härtbaren Zusammensetzung, bestehend aus:
- mindestens einem filmbildenden polymeren Einkomponenten-Bindemittel, falls die Zusammensetzung durch Reaktion mit der Umgebungsluft, beispielsweise wenn sie der Luftfeuchtigkeit oder dem Sauerstoff ausgesetzt wird oder infolge der Verdunstung eines Abbindehemmstoffes, härtbar ist, oder einer Komponente aus einem filmbildenden polymeren Bindemittel, das dazu bestimmt ist, mit einem organischen Härter kombiniert zu werden, der die zweite Komponente des polymeren Bindemittels darstellt, und
- mindestens einem teilchenförmigen kristallinen abriebfesten Füllstoff mit einer Teilchengröße zwischen 5 »m und 800 »m, einer Kornform mit scharfen oder schneidenden Kanten, in einem Anteil, bezogen auf das bzw. die Bindemittel, der so gewählt wird, daß an der Oberfläche des entstehenden ausgehärteten Belages eine zum Festhalten der Beschwerungsplatten geeignete Rauheit erzeugt wird.

4. Verwendung nach Anspruch 3, dadurch gekennzeichnet, daß die Zusammensetzung mindestens ein filmbildendes polymeres Einkomponenten-Bindemittel, ausgewählt aus der Gruppe Styrol-Acrylsäure-Copolymere, Copolymere auf Acrylesterbasis, Ethylen-Vinylacetat-Copolymere, Ethylen-Vinylacetat-Alkylacrylat-Terpolymere, wobei es sich bei der Alkylgruppe um eine C₁-C₈-Alkylgruppe handelt, und Einkomponenten-Polyurethane, aufweist.

5. Verwendung nach Anspruch 3, dadurch gekennzeichnet, daß das filmbildende polymere Bindemittel aus zwei Komponenten besteht, wobei die zweite, härtende Komponente ein Isocyanat oder ein Amin darstellt.

6. Verwendung nach Anspruch 5, dadurch gekennzeichnet, daß das filmbildende polymere Zweikomponenten-Bindemittel eine Polyurethan liefernde Kombination aus Polyolalkohol und Polyisocyanat ist.

7. Verwendung nach einem der Ansprüche 3 bis 6, dadurch gekennzeichnet, daß das polymere Bindemittel an ein anorganisches hydraulisches Bindemittel gebunden ist.

8. Verwendung nach einem der Ansprüche 3 bis 7, dadurch gekennzeichnet, daß der teilchenförmige kristalline Füllstoff einer kieselsäurehaltiger Füllstoff wie Quarz oder Quarzsand ist.

9. Verwendung nach einem der Ansprüche 3 bis 8, dadurch gekennzeichnet, daß die Zusammensetzung über den im allgemeinen wäßrigen Träger hinaus noch Hilfsmittel mit einschließt, ausgewählt aus der Gruppe Koaleszenzverbesserer, Verdickungsmittel, viskositäts- und rheologieregulierende Mittel, Füllstoffe, filmbildende Mittel, Schaumverhütungsmittel, fungizide Mittel, Insektizide, Tenside, wasserabweisende Mittel, Frostschutzmittel und Pigmente.
